# EUROPEAN PATENT APPLICATION

(11) **EP 4 494 971 A1**
(43) Date of publication of application: **22.01.2025**
(21) Application number: 22932335.7
(22) Date of filing: 16.12.2022
(51) Int. Cl.: B61L 23/00, B61L 23/04, G01S 17/931, G06T 7/00, G06V 20/58

(54) **FORWARD MONITORING SYSTEM AND METHOD THEREFOR**

(30) Priority: 17.03.2022 JP 2022042337
(71) Applicant: Hitachi, Ltd., Tokyo 100-8280 (JP)
(72) Inventor: KUDO, Takumi, Tokyo 100-8280 (JP); SHIMIZU, Taku, Tokyo 100-8280 (JP); ODA, Atsushi, Tokyo 100-8280 (JP); SATO, Kiwamu, Tokyo 100-8280 (JP)
(74) Representative: MERH-IP Matias Erny Reichl Hoffmann Patentanwälte PartG mbB
(86) International application number: PCT/JP2022/046339
(87) International publication number: WO 2023/176073

(57) **Abstract**

A laying-surface point group removing unit removes a laying-surface point group from a sensor output. A first narrowing-down unit extracts a first track candidate object by comparing a cross-sectional shape of an object that is information included in a remainder after the removal with a track cross-section stored in a memory by a computer. A second narrowing-down unit detects a second track candidate object by comparing a width of the first track candidate object with a width of the track cross-section. A track curve complementing unit recognizes the track by complementing a track object including the second track candidate object. The sensor output includes a point group corresponding to the track and a point group corresponding to a laying surface of the track. The laying-surface point group removing unit extracts information regarding the object from the sensor output. The track curve complementing unit recognizes the extracted object as a track and supports determination of whether an obstacle is nearby. Accordingly, it is possible to provide a front monitoring system capable of stably recognizing a track even when a point group corresponding to the track acquired by the sensor is incomplete.

## Description

### Technical Field

The present invention relates to a front monitoring system and method.

### Background Art

In techniques for monitoring fronts of vehicles that are traveling, it is necessary to estimate vehicle traveling regions in order to detect objects that may obstruct vehicle traveling and take countermeasures. The vehicle traveling region can be defined as 3-dimensional spaces along tracks. To estimate such traveling regions, a rail detection method executed by sensors have been proposed in PTL 1 to PTL 3.

PTL 1 proposes a method of estimating rail positions by matching camera image data serving as sensor outputs with template image data of rails prepared in advance or reference distribution data of luminance values of the rails.

PTL 2 proposes a method of using ranging data obtained from a ranging sensor capable of finding a range over a predetermined range in a track width direction, processing the ranging data, and detecting an edge of a track in the track width direction, and estimating the track based on the detected edge.

PTL 3 proposes a method of confirming a rail position by matching a point group extracted by determining a search range based on path information or a track gauge acquired by position estimation means to a point group of a rail template and also confirming a rail position by selecting an appropriate template from a plurality of types of templates and performing correct matching.

### Citation List

### Patent Literature

PTL 1: JP2020-006788A
PTL 2: JP2020-155047A
PTL 3: JP2016-212031A

### Summary of Invention

### Technical Problem

In rail detection by a camera image of PTL 1, deterioration in performance at night is unavoidable. It is difficult for the ranging sensor formed by a laser radar of PTL 2 to identify a track accurately when three or more objects including items at the same height as the track such as balise are detected.

In the method of PTL 3, even if a 3-dimensional laser radar is used, there is a possibility of failing to detect a rail when an own position is uncertain or inaccurate. Since the surface of the rail has high specular reflectance, a laser beam radiated to a rail top surface is specularly reflected and does not return to the sensor, which results in missing a point group of the rail top surface and making correct matching difficult. Even if a template with an incorrect shape is selected for matching and matches an object other than the rail, it is difficult to confirm the rail position.

The present invention has been devised in view of the above problems and an object of the present invention is to provide a front monitoring system capable of stably recognizing a track even when a point group corresponding to a track acquired by a sensor is incomplete.

### Solution to Problem

To solve the above problems, according to an aspect of the present invention, provided is a front monitoring system including a sensor that ascertains a track for guiding a mobile body and a computer that processes a sensor output. The front monitoring system includes: a laying-surface point group removing unit configured to remove a laying-surface point group from the sensor output; a first narrowing-down unit configured to extract a first track candidate object by comparing a cross-sectional shape of an object that is information included in a remainder after the removal with a track cross-section stored in a memory by the computer; second narrowing-down unit configured to detect a second track candidate object by comparing a width of the first track candidate object with a width of the track cross-section; and a track curve complementing unit configured to recognize the track by complementing a track object including the second track candidate object. The sensor output includes a point group corresponding to the track and a point group corresponding to a laying surface of the track. The laying-surface point group removing unit extracts information regarding an object from the sensor output. The track curve complementing unit recognizes an object projecting from the laying surface as a track based on the extracted information regarding the object, and outputs information for supporting determination of whether a traveling obstacle is near the recognized track.

### Advantageous Effects of Invention

According to the present invention, it is possible to provide a front monitoring system capable of stably recognizing a track even when a point group corresponding to the track acquired by a sensor is incomplete. Accordingly, to prevent erroneous determination or non-determination in obstacle determination, it is possible to output highly accurate rail detection information and make support for enhancing safety of a vehicle operation.

### Brief Description of Drawings

[Fig. 1] Fig. 1 is a perspective view illustrating a representative fault detection example by a front monitoring system according to Embodiment 1 of the present invention (hereinafter also referred to as a "present system").
[Fig. 2] Fig. 2 is a flowchart illustrating a processing procedure or the like of the present system according to Embodiment 1.
[Fig. 3] Fig. 3 is a diagram illustrating a coordinate system applied to the present system.
[Fig. 4] Fig. 4 is a plan view illustrating track center estimation in the present system according to Embodiment 1.
[Fig. 5] Fig. 5 is a front sectional view illustrating an object extraction method in the present system according to Embodiment 1.
[Fig. 6] Fig. 6 is a front sectional view illustrating a narrowing-down process in accordance with rail cross-sectional dimensions in the present system according to Embodiment 1.
[Fig. 7] Fig. 7 is a front sectional view illustrating a narrowing-down process in accordance with inter-rail dimensions in the present system according to Embodiment 1.
[Fig. 8] Fig. 8 is a flowchart illustrating a processing procedure or the like of a present system according to Embodiment 2 of the present invention (also referred to as a "present system" other than Embodiment 1).
[Fig. 9] Fig. 9 is a plan view illustrating a narrowing-down process by a track prediction line in the present system according to Embodiment 2.
[Fig. 10] Fig. 10 is a plan view illustrating a narrowing-down process by a track prediction line corresponding to a curve and a branch in the present system according to Embodiment 2.
[Fig. 11] Fig. 11 is a front sectional view illustrating a narrowing-down process in accordance with rail cross-sectional dimensions in a present system according to Embodiment 3.
[Fig. 12] Fig. 12 is a plan view illustrating a narrowing-down process in accordance with a track prediction line in a present system according to Embodiment 4.
[Fig. 13] Fig. 13 is a front sectional view illustrating an object extraction method in a present system according to Embodiment 5.
[Fig. 14] Fig. 14 is a front sectional view illustrating an object extraction method in a present system according to Embodiment 6.
[Fig. 15] Fig. 15 is a plan view illustrating a branch determination method in a present system according to Embodiment 7.
[Fig. 16] Fig. 16 is a plan view illustrating a method of installing a sensor in a present system according to Embodiment 8.

### Description of Embodiments

Hereinafter, Embodiments 1 to 8 of the present invention will be described with reference to the drawings. The present invention is not limited to these embodiments. Hereinafter, stable rail (track) detection by the present system will be described using a track basically including two rails as a representative example. The present system can also be applied to a new traffic system or a monorail with a different track form from the representative example. The present system is also applied to a vehicle moving in a station premise or a vehicle base in addition to a train driven between railway stations, and application targets are all referred to as vehicles.

### [Embodiment 1]

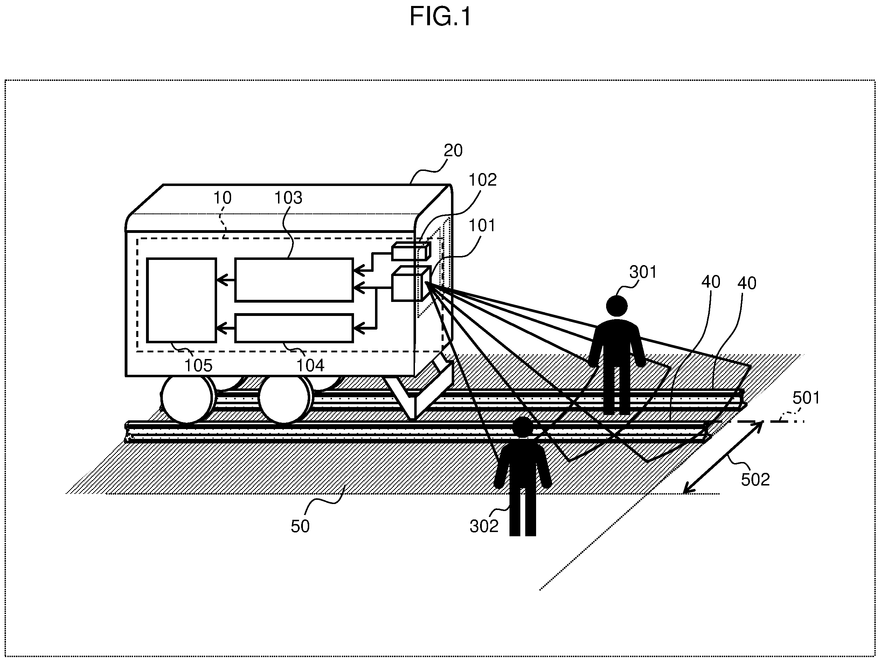

Fig. 1 is a perspective view illustrating a representative fault detection example by a present system 10. The present system 10 supports a safe operation of a mobile body (hereinafter also referred to as a "vehicle") 20 that is guided to a track 40 as illustrated in the fault detection example of Fig. 1 and travels therealong. The present system 10 includes a front monitoring sensor 101, an object detection unit 103, a rail detection unit 104, and an obstacle determination unit 105, which are configured as onboard devices mounted on the vehicle 20, but may be ground facilities (not illustrated) except for the sensor 101.

Each functional unit of the present system 10 is a processing function formed by a computer executing a program stored in a memory. Some functional units are not illustrated since the functional units are not identified visually. Therefore, the terms "∼ units" are used to facilitate description and can be interpreted to have substantially the same meanings as terms "∼ processes" that can be used instead. The computer is sufficient as a single-chip microcontroller, but a personal computer or the like can also be used. Additionally, a communication function may be used to share a part of a computer included in an operation management unit or another ground facility.

In the present system 10, data acquired by the front monitoring sensor 101 is processed by the computer to determine an obstacle. That is, the present system 10 and a front monitoring method using the present system (hereinafter also referred to as a "present method") adopt a laser radar for the front monitoring sensor 101, and estimates, as the rail 40, an object that matches an external feature (hereinafter also referred to as a "dimension feature") of the rail 40 in units of objects obtained by extracting a point group protruding from the ground from among the acquired point groups and compiling the extracted point group.

The object detection unit 103 estimates a position of an object in front of a vehicle and the rail detection unit 104 estimates a position of the rail 40 in front of the vehicle. Subsequently, the obstacle determination unit 105 estimates a vehicle traveling region 50 based on a rail position estimation result and determines whether an object position estimation result is within the vehicle traveling region 50.

The front monitoring sensor (hereinafter also referred to as a "sensor" or a "laser radar") 101 is installed in the vehicle 20 and acquires point group information in front. The object detection unit 103 estimates a position of an object in front of the vehicle 20 based on a sensor output of the sensor 101. The object detection unit 103 may detect an object using the sensor 101, a second front monitoring sensor 102 that has a different property from the sensor 101, and data of at least one of the sensor 101 and the second front monitoring sensor 102.

The second front monitoring sensor 102 can be, for example, a camera, a millimeter wave radar, or the like that serves as the sensor 102 that has a different property to have redundancy as the same purpose as the sensor 101. The rail detection unit 104 has a function of accepting point group information of the sensor 101 as an input and detecting the rail 40 in front of the vehicle.

The obstacle determination unit 105 has a function of determining whether a detected object is an obstacle based on results of the object detection unit 103 and the rail detection unit 104. More specifically, when a position of the object is within the vehicle traveling region 50 like an object 301 in Fig. 1, the object obstructs the traveling of the vehicle. Therefore, the obstacle determination unit 105 determines that the object is an obstacle. Conversely, when the position of the object is outside of the vehicle traveling region 50 like an object 302 in Fig. 1, the vehicle does not obstruct the traveling of the vehicle. Therefore, the obstacle determination unit 105 determines that the object is not the obstacle.

The vehicle traveling region 50 is a 2-dimensional or 3-dimensional region where the vehicle 20 travels in future. The object 301 that is present in the vehicle traveling region 50 is considered to have a collision risk with the vehicle 20 and is determined to be an obstacle. As an example of a method of calculating the vehicle traveling region 50, there is a method of obtaining an intermediate line of two rails 40 as a track axis 501 using a rail detection result and setting up to a region away from the track axis 501 by a distance 502 as the vehicle traveling region 50. The distance 502 may be calculated, for example, based on a legal reference such as a construction limit or a vehicle limit.

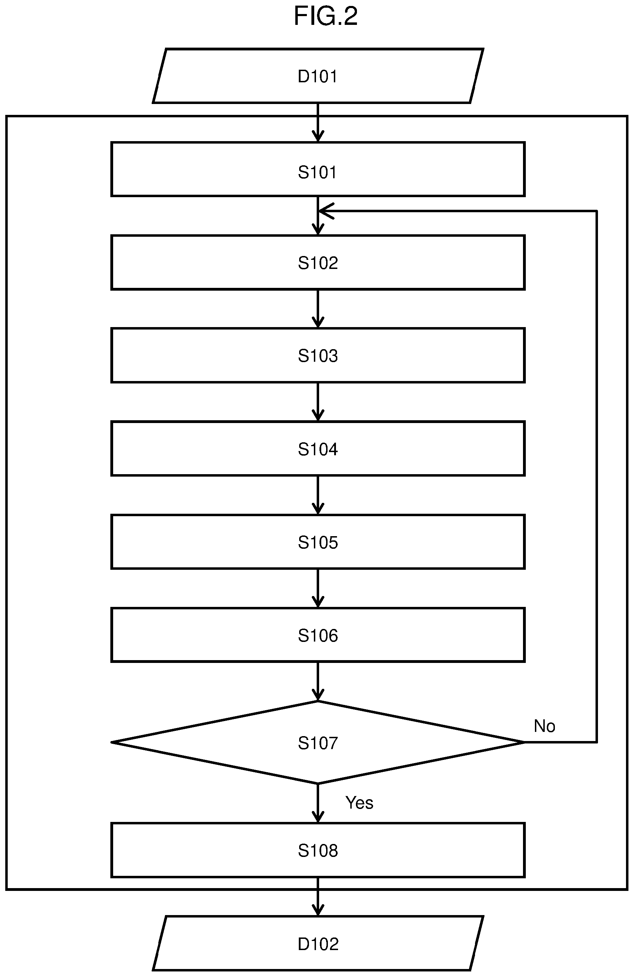

Next, an operation of the present system 10 will be described. Fig. 2 is a flowchart illustrating a processing procedure or the like of the present system 10 in Fig. 1. The processing procedure includes point group data D101, a point group coordinate data acquisition process S101, a track center point estimation process S102, an intra-section point group extraction process S103, an object extraction process S104 involving a ground point group removing process, a narrowing-down process S105 in accordance with rail cross-sectional dimensions (first narrowing-down process), a narrowing-down process S106 in accordance with inter-rail dimensions (second narrowing-down process), and a process S107 of determining whether a predetermined point group process is completed, a rail curve complementing process S108, and a rail estimation curve D102.

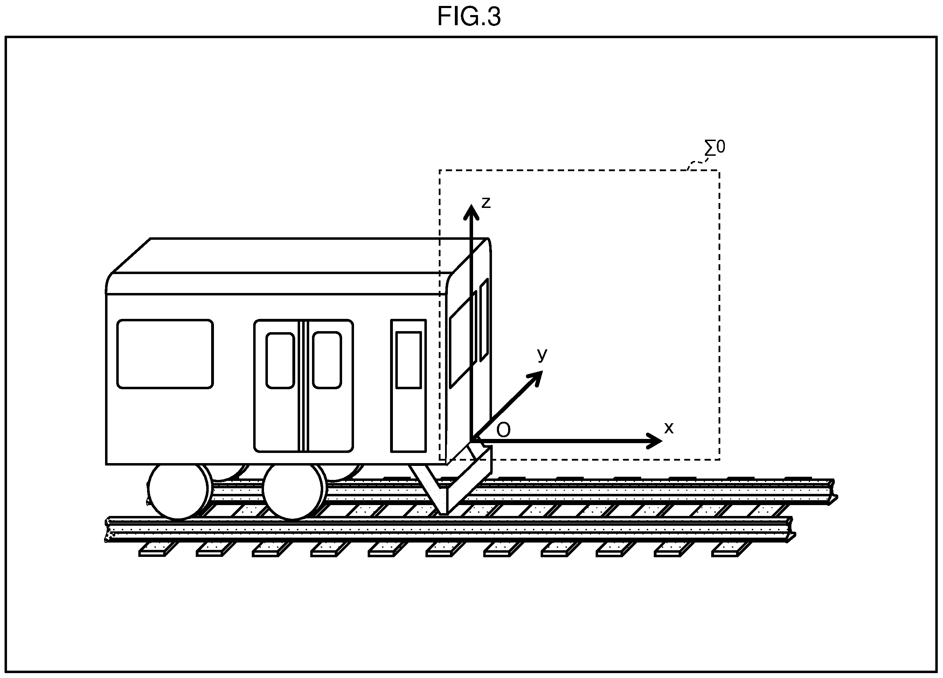

Hereinafter, each of these processes is denoted by the sign S. In Fig. 2, in particular, S101 to S108 refer to an operation of the rail detection unit 104. When S107 is Yes, the operation proceeds to S108. When S107 is No, the operation returns to S102. The rail detection unit 104 first acquires the point group data D101 input from the sensor 101 in S101 and converts the point group data D101 into a vehicle fixing 3-dimensional xyz coordinate system Σ0 (hereinafter abbreviated to a coordinate system Σ0) defined in Fig. 3.

Fig. 3 is a diagram illustrating the definition of the coordinate system Σ0 applied to the present system 10. The coordinate system Σ0 is a right-handed coordinate system that has an x axis in a direction along the rail 40, an y axis in a sleeper axis, and a z axis in a zenith direction. Further, for the origin O, an x origin is set as a vehicle front surface position, a y origin is set as a middle point of the vehicle front side in the y direction, and a z origin is a lowest surface position of a vehicle underframe (not illustrated) in the z direction.

In subsequent processes S102 to S106, the present system 10 detects all the rails 40 within the range by repeating an operation of defining an inspection section based on an estimated track center, detecting the rail 40 using a point group in the inspection section, and estimating a track center point of a subsequent inspection section using a rail detection result from the vicinity to a far location of the vehicle. The inspection section is a region in a constant distance range in which an estimated track center point is set as a base point, and is defined at a substantially equal interval along the rail 40 or the x axis.

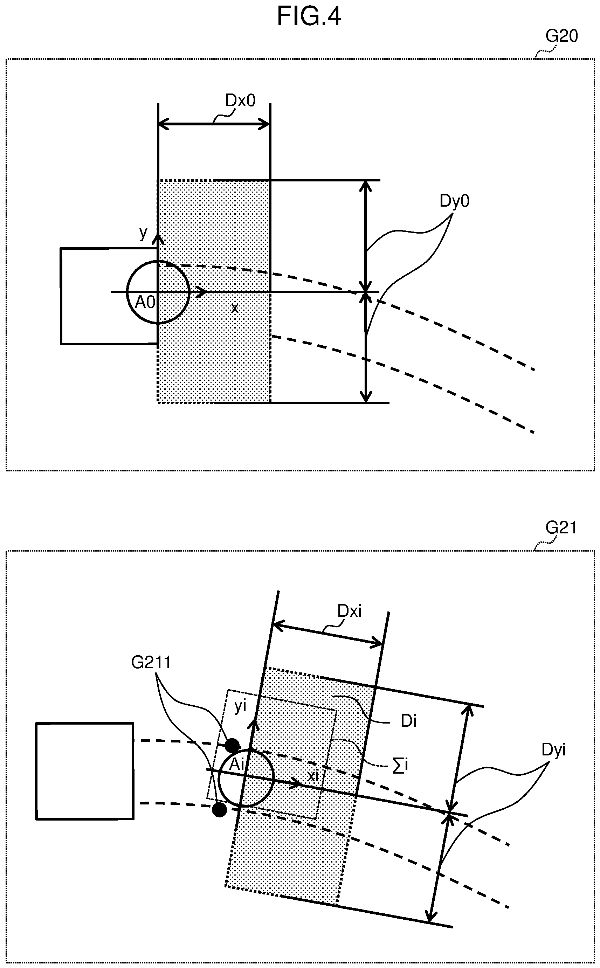

Fig. 4 is a plan view illustrating the track center point estimation process S102 in the present system 10 according to Embodiment 1. A method of calculating the estimated track center and the inspection section in S102 is different between a case of a nearest neighbor to the vehicle 20 as illustrated in Fig. 4 (G21) and the other case of Fig. 4 (G21).

First, in the case of the nearest neighbor to the vehicle (G20), the y origin of the coordinate system Σ0 is between the two rails 40 in many cases. Further, a change factor of the positions of the rails 40 in the z direction with respect to the vehicle 20 is the degree of up and down motion of the vehicle 20 by a suspension device such as an air spring. Therefore, relative positions of the rails 40 in the z direction to the vehicle 20 can be considered to be substantially constant.

Accordingly, the present system 10 defines a constant range in which A0 is a base point by setting a y coordinate of the estimated track center to y = 0, setting a z coordinate to a z position of a rail top surface when the vehicle 20 is stationary, and setting an x position to x = 0. The present system 10 can acquire coordinates of a point group including the left and right rails 40 (hereinafter simply referred to as "acquisition") in the definition of the coordinates.

In the definition of an inspection section in the case of the nearest neighbor to the vehicle, as in Fig. 4 (G20), a region in which A0 is set as a base point and which includes up to a position distant by a distance of Dy0 in the positive and negative directions of y and up to a position distant by a distance Dx0 in the positive direction of x may be used.

Next, a method of calculating an estimated track center Ai at an inner position from the nearest neighbor will be described with reference to Fig. 4 (G21). The estimated track center Ai is assumed to be a middle point of left and right rail detection results G211 as in Fig. 4 (G21). The estimated track center Ai is closer to the vehicle 20 than an inspection section Di and is a middle point of the left and right rail detection results G211 in an inspection section Di-1 immediately previous to the inspection section Di.

The left and right rail detection results G211 may be a set of representative points of left and right rail detection results in the inspection section Di-1. Alternatively, a set of the farthest points of the left rail 40 and the farthest points of the right rail 40 in the point group corresponding to the representative points of the left and right rail detection results may be the left and right rail detection results G211.

In a method of calculating the inspection section Di, as in Fig. 4 (G21), a coordinate system Σi corresponding to the inspection section Di may be defined and a region in which the estimated track center Ai is a base point and which includes up to a distance of each of a distance Dyi in the positive and negative directions of yi and a distance Dxi in the positive direction of xi from the base point Ai may be used.

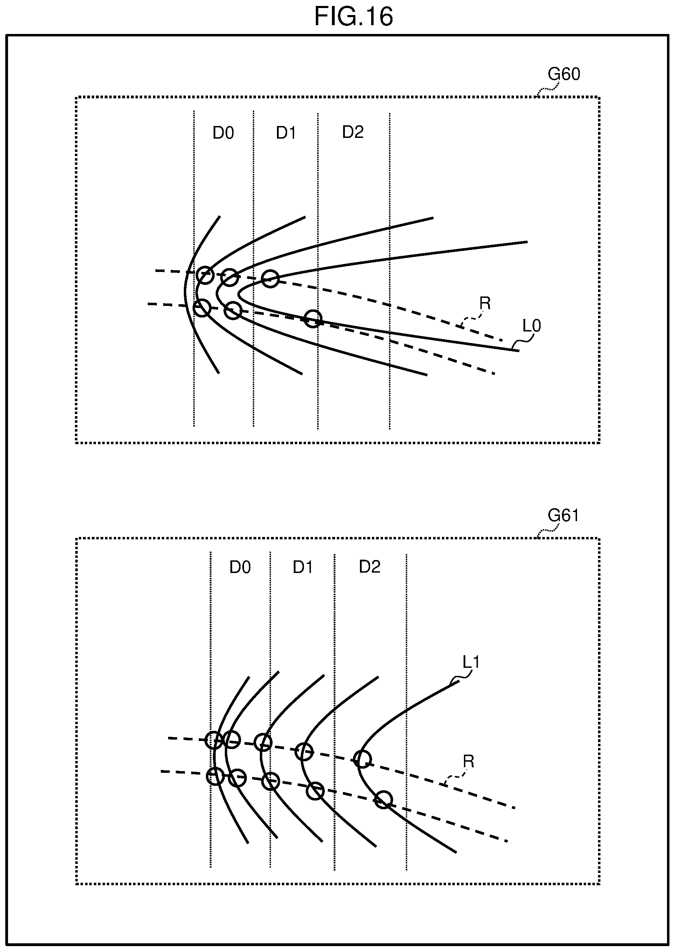

Each axis of the coordinate system Σ0 may be parallel to a direction of the coordinate system Σi. Alternatively, the coordinate system Σi may be rotated with respect to the coordinate system Σ0. In the case of the rotation, the origin Ai of a track axis prediction line yi = ci is generated based on rail detection results in inspection sections D0, D1, ..., Di-1 (Fig. 16). A tangential direction to a curve rail detected in the origin Ai is an xi axis.

The yi axis of the coordinate system rotated in this way is closer to be parallel to the sleeper direction of the rails 40 than the y axis of the coordinate system Σ0 when the rails 40 are curved. A track gauge is substantially equal to an inter-rail distance in the sleeper direction. When a rail candidate narrowing-down process using the track gauge and performed in a process in a rear stage is performed, it is expected that it is more accurate to use a distance of a rail candidate narrowed down in a front stage in the yi direction than a distance of a plurality of rail candidates in the y direction. The above operation is an operation of S102.

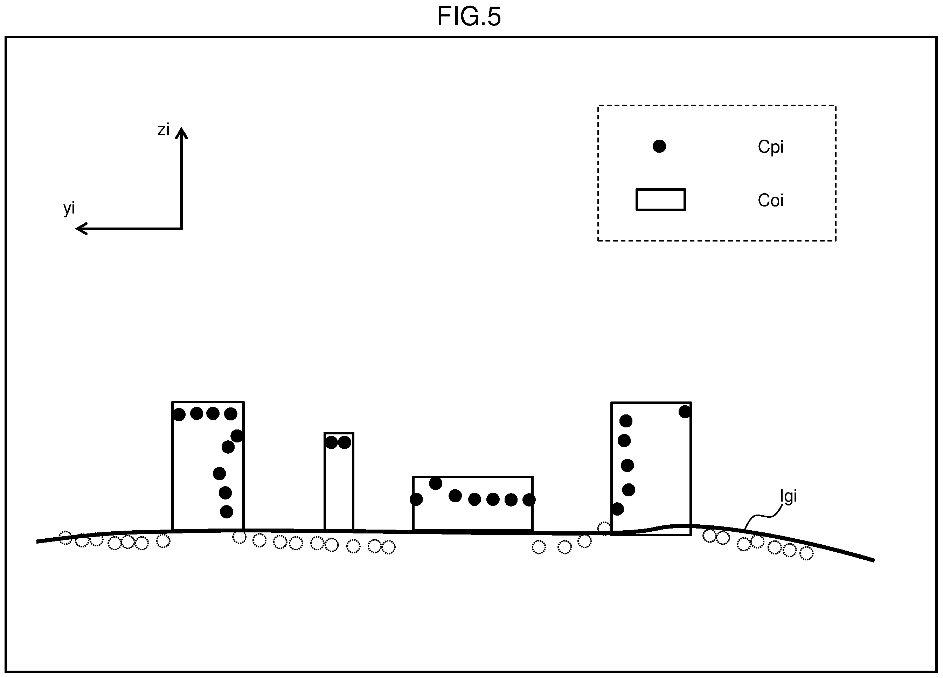

Subsequently, in S103, a point group that is present in the inspection section calculated in S102 is extracted as an intra-section point group including the rails 40. Further, in S104, a point group corresponding to the ground among the intra-section point groups is removed and a plurality of objects Coi (Fig. 5) protruding from the ground are detected.

Fig. 5 is a front sectional view illustrating an object extraction method in the present system 10 according to Embodiment 1 and is a diagram illustrating a method of removing a ground point group in S104 of Fig. 2 and a method of detecting the plurality of objects Coi protruding from the ground. As illustrated in Fig. 5, in S104, the intra-section point groups indicated by • and o are first projected onto a 2-dimensional plane formed by yi and zi axes of the coordinate system Σi. Subsequently, in S104, a straight line or curve lgi connecting o corresponding to the ground is identified.

In Fig. 5, the present system 10 further removes a point group in which a distance to the straight line or curve lgi in the zi direction is equal to or less than a threshold Δzg and a point group in which the zi coordinate is less than in the straight line or curve lgi from the intra-section point groups. Accordingly, the present system 10 can remove a point group indicated by o corresponding to the ground and extract a point group Cpi protruding from the ground and indicated by •.

Regarding the straight line or curve lgi, the present system 10 may detect the curve lgi or the like even using a curve calculation method of removing the point group Cpi protruding from the ground as a deviation value, for example, by paying attention to a tendency of the point group corresponding to the ground to have a large number of points compared to the point group protruding from the ground. Alternatively, the straight line or curve lgi may be detected as a single regression straight line on an extension line of the number of known points.

Next, a method of calculating a plurality of objects Coi protruding from the ground will be described. For the plurality of objects Coi protruding from the ground, the present system 10 groups the point groups Cpi protruding from the ground with an inter-point distance and compiles and obtains the point groups in units of objects. For example, there is a method of performing the grouping by considering points of which an inter-point distance of the point group Cpi is equal to or less than a predetermined threshold D to form the same object. The above operation is an operation of S104.

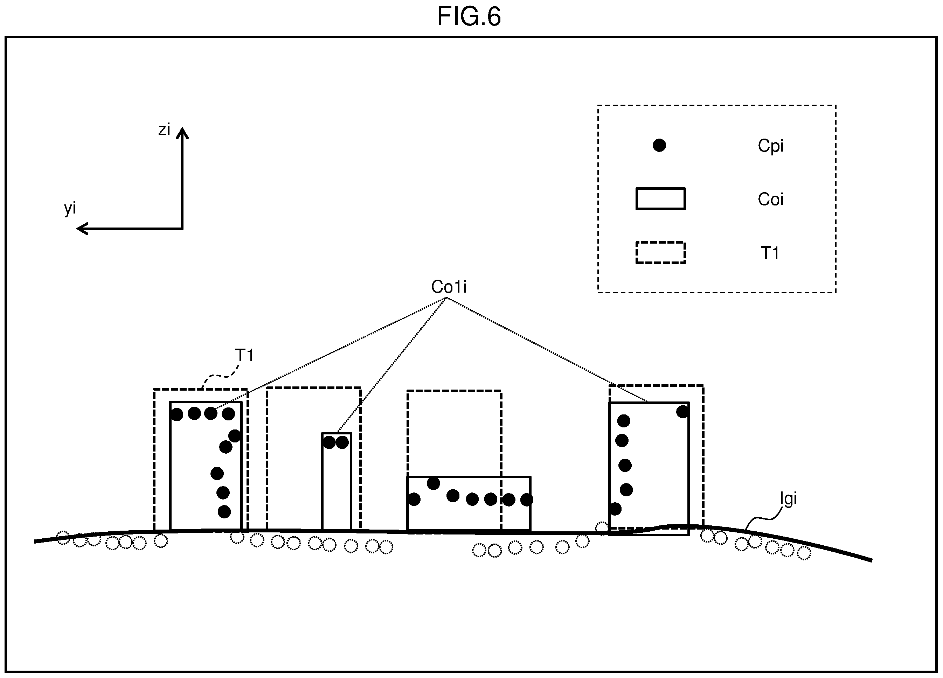

Next, S105 illustrated in Fig. 6 in a first narrowing-down process (S105 and S106) of the present system 10 will be described. Fig. 6 is a front sectional view illustrating the narrowing-down process (S105) in accordance with rail cross-sectional dimensions. In S105, an object that has the dimension feature of the rail cross-section is extracted from the plurality of objects Coi and a first rail candidate object Co1i is acquired.

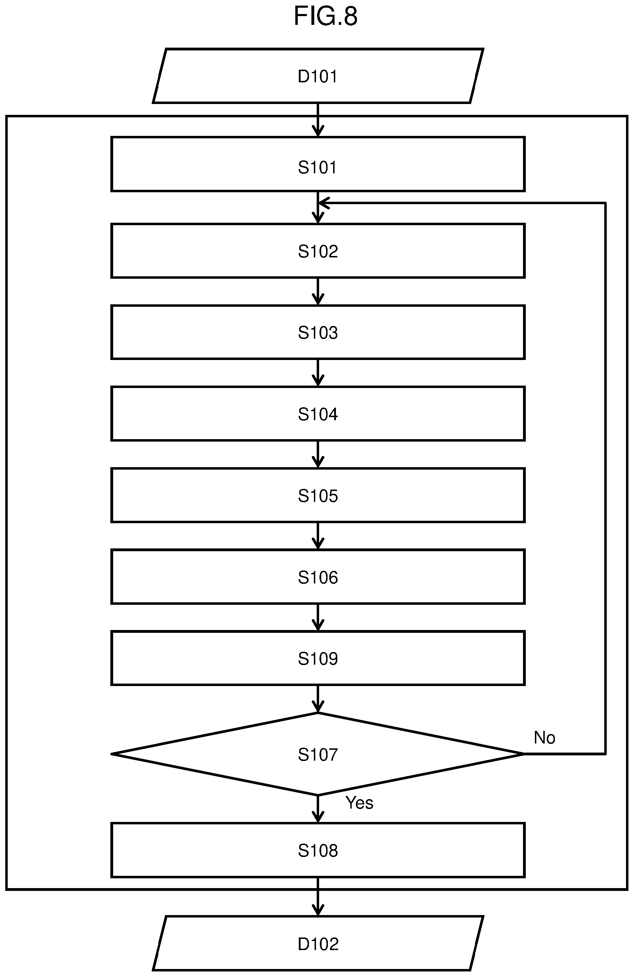

As illustrated in Figs. 2, 8 (S105), and 6, the present system 10 performs the first narrowing-down process (S105) using a first incomplete template T1 (Fig. 6) that imitates the dimension feature of the rail cross-section. That is, the present system 10 considers that an object that falls within a range of the first incomplete template T1 has the dimension feature of the rail cross-section among the plurality of objects Coi and extracts the first rail candidate object Co1i.

The first incomplete template T1 has a figure shape generated based on dimensions of the rail cross-section and has, for example, a rectangle in which a margin is added to maximum longitudinal and transverse dimensions of the rail cross-section. A middle point of a lower side of the first incomplete template T1 is set to be positioned on the straight line or curve lgi corresponding to the ground. In this setting, the present system 10 extracts the first rail candidate object Co1i that has the same dimensions as the rail cross-section. At this time, the present system 10 processes a sensor output using the first incomplete template T1. The first incomplete template T1 has an advantage of removing noise from a point group floating from the ground.

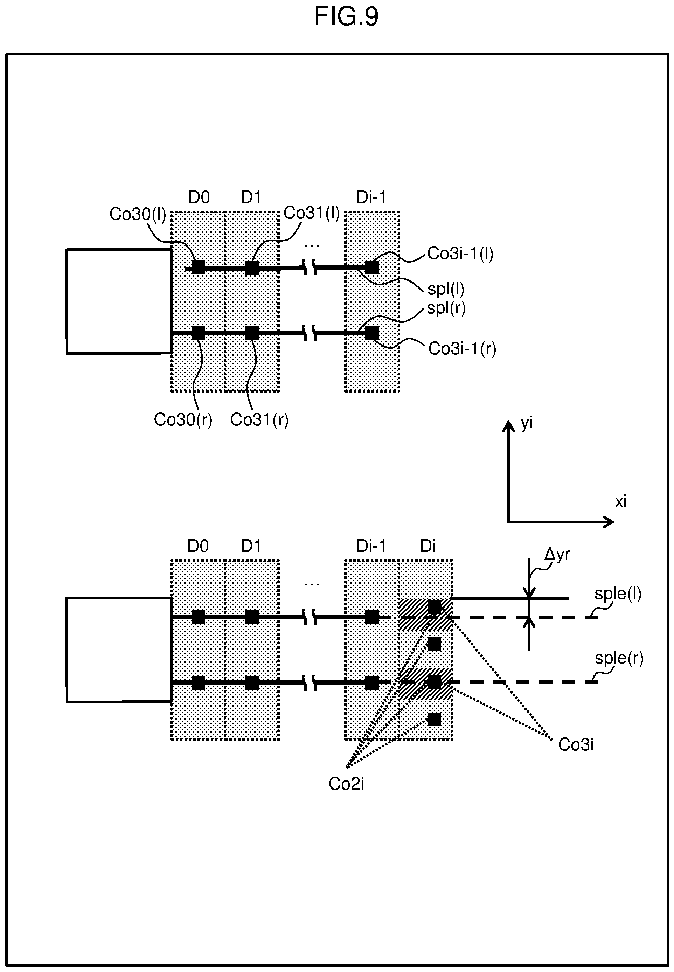

The present system 10 can recognize that even a rail point group that is defective for completing a contour of the rail cross-section is considered to be within the range of the first incomplete template T1. Accordingly, the present system 10 can stably recognize, as the rail 40, even a point group in which a rail top surface portion is missing, which was a problem of PTL 3, by remaining as a rail candidate. The above operation is an operation of S105. Subsequently, the narrowing-down process (S106) in accordance with the inter-rail dimensions is performed to extract second rail candidate objects Co2i (Fig. 9) by comparing a distance between the first rail candidate objects Co1li with the track gauge.

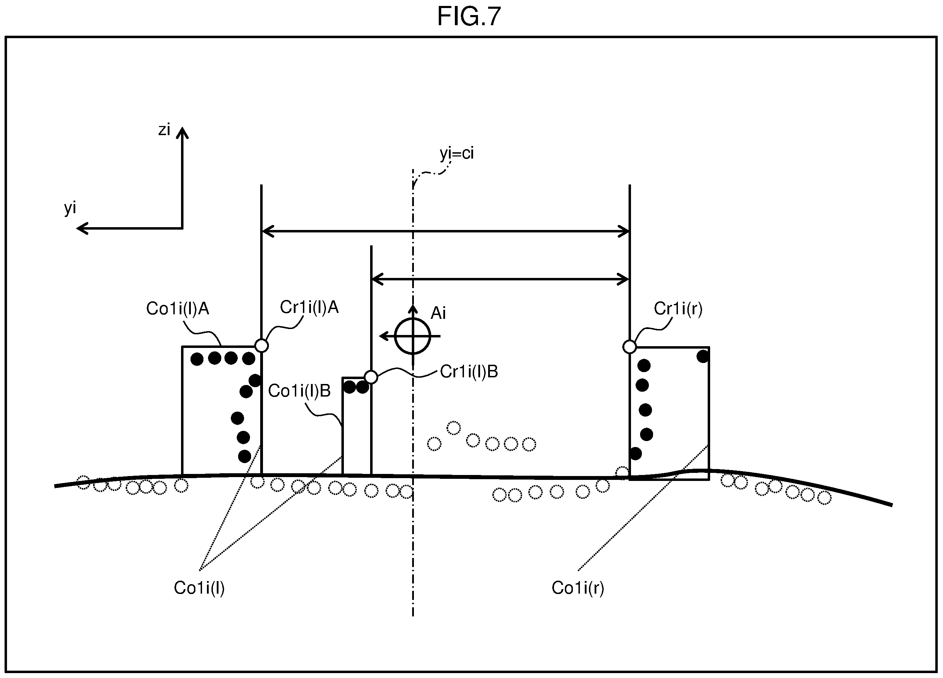

Fig. 7 is a front sectional view illustrating the narrowing-down process (which is S106 of Figs. 2 and 8 and corresponds to the second narrowing-down process described in the present invention) in accordance with track gauge dimensions of the rail 40 in the present system according to Embodiment 1. The present system 1 compares whether an actually measured distance between the plurality of first rail candidate objects Co1i matches a known track gauge. First, since the track gauge is a distance between the inner side of the left rail 40 and the inner side of the right rail 40, it is necessary to calculate a position considered to be inside the rail 40 in the first rail candidate object Co1i.

Accordingly, the present system 10 generates a track center line yi = Ci parallel to the zi axis through the estimated track center Ai and considers an object with a large yi coordinate and an object with a small yi coordinate as a left rail object and a right rail object respectively as in Fig. 7 with respect to the track center line yi = Ci. That is, the present system 10 sets all the first rail candidate objects Co1i with larger yi coordinates than Ci as objects Co1i (l) estimated as the left rail 40 and sets all the first rail candidate objects Co1i with smaller yi coordinates than Ci as objects Coli(r) estimated as the right rail 40.

The present system 10 determines that the object Co1i of which the yi coordinate straddling over Ci among the objects Co1i cannot be the rail 40 and excludes the object Co1i. Subsequently, the present system 10 can obtain point candidates inside the left and right rails 40 by setting a minimum value in the yi direction of the object Co1i (l) estimated to be the left rail 40 as a representative point of an object Co1i (l) A and setting a maximum value in the yi direction of the object Co1i (r) estimated to be the right rail 40 as a representative point of an object Co1i (r) .

Finally, the present system 10 extracts a set of objects in which a distance of the representative point is within a distance range generated based the track gauge from a set of all the objects Co1i (l) and objects Co1i (r) and sets the objects as the second rail candidate objects Co2i (Fig. 9). The second rail candidate objects Co2i form pairs of right rail objects Co12i (r) and left rail objects Co12i (l).

Here, a method of extracting the right rail objects Co12i (r) and left rail objects Co12i (l) will be described with reference to Fig. 7. In an example of Fig. 7, the left rail objects are two objects Co1i (l) A and Co1i (l) B and the right rail object is one object Co1i (r).

A distance between a representative point Cr1i (l) A of the left object Co1i (l) A and a representative point Cr1i (r) of the right object Co1i (r) is within a range recognized to be equal to the track gauge. A distance between a representative point Cr1i (l) B of an object Co1i (l) B further on the left than the middle and the representative point Cr1i (r) of the object Co1i (r) is too close and outside of a range. In a case exemplified in Fig. 7, the present system 10 recognizes the object Co1i (l) A as a left rail object Co12i (l) and recognizes the object Co1i (r) as a right rail object Co12i (r).

The present system 10 can further remove an object that has longitudinal and transverse dimensions similar to the rail cross-section or a height from the ground and is not the rail 40 among the first rail candidate objects Co1i extracted through the first narrowing-down process by performing the second narrowing-down process by the track gauge, a success rate of rail detection is improved, and thus more stable rail detection is possible. The above operation is an operation of S106.

Subsequently, in S107, it is determined whether the process is completed on the processing target point group. When the process is not completed, the operation returns to S102 and second rail candidate objects Co2i+1 (r) are also calculated for a subsequent inspection section Di+1. When the process is completed, the operation proceeds to S108. A rail detection result is calculated in S108. In S108, rail detection results are output by linking and complementing all the second rail candidate objects Co2i, Co120, Co121, ..., Co12n calculated in inspection sections D0, D1, ..., Dn (see Fig. 16) .

The complementation of the second rail candidate object Co2i (Fig. 9) is performed on each of the left and right rails 40. That is, the present system 10 extracts a right rail curve by obtaining a complementation curve using all the right rail objects Co20 (r), Co21 (r), ..., Co2n (r) in the inspection sections D0, D1, ..., Dn.

Similarly, the present system 10 extracts a left rail curve by obtaining a complementation curve using all the left rail objects Co20 (1), Co21 (1), ..., Co2n (l) in the inspection sections. The right rail curve and the left rail curve are integrated to be output as a rail estimation curve D102 (Fig. 2) that is a rail detection result.

### [Embodiment 2]

In Embodiment 2, a rail detection method of which performance is enhanced by adding a narrowing-down unit using a track prediction line to the configuration of Embodiment 1 will be described with reference to Figs. 8 to 10. The present system 10 in Fig. 8 improves noise resistance of rail detection performance and can also detect left and right rail pairs at a branch.

Fig. 8 is a flowchart illustrating a narrowing-down process in accordance with a track prediction line in the present system 10, in particular, an operation of the rail detection unit 104. In Embodiment 2 (Fig. 8), a narrowing-down process S109 using a track prediction line (a third narrowing-down process in the present invention) is added between S106 and S107 of Embodiment 1 (Fig. 2). In S109, a new narrowing-down process and branch determination are performed using a track prediction line on the second rail candidate object Co2i output by the narrowing-down unit in accordance with inter-rail dimensions, and a third rail candidate object Co3i is output.

The track prediction line is a straight line or a curve that is calculated using the rail detection results of the inspection sections D0, D1, ..., Di-1 previous to the current inspection section Di and indicates an estimated position of the rail 40 in the inspection section Di.

Fig. 9 is a plan view illustrating the narrowing-down process S109 by a track prediction line in the present system 10 according to Embodiment 2. In Fig. 9, a method of generating the track prediction line and the narrowing-down process S109 for the second rail candidate object Co2i by the track prediction line are exemplified. First, the method of calculating the track prediction line is as follows.

That is, the present system 10 complements left rail objects Co30 (1), Co31 (1), ..., Co3i-1 (1) included in the third rail candidate objects Co30, Co31, ..., Co3i-1 calculated in the sections D0, D1, ..., Di-1 previous to the current inspection section Di.

The present system 10 calculates an extrapolation line Sple (l) of a complementation line Spl (l) of the left rail 40. The present system 10 generates an extrapolation line Sple (r) of a complementation line Spl (r) of the right rail 40 calculated by complementing right rail objects Co30 (r), Co31 (r), ..., Co3i-1 (r) as a track prediction line.

The present system 10 according to Embodiment 2 uses the third rail candidate objects of the sections D0, D1, ..., Di-1 before and after the current inspection section Di to calculate the track prediction line, but may use only sections Di-L, ..., Di-1 of L points (not illustrated) previous to the inspection section Di.

Next, a narrowing-down process for the second rail candidate objects Co2i will be described. In the inspection section Di, the second rail candidate object Co2i of which distances to the extrapolation lines Sple (l) and Sple (r) are within a threshold Δyr are extracted as the third rail candidate objects Co3i. At this time, as in Embodiment 2, when the number of extracted objects is one left rail object Co3i (l) and one right rail object Co3i (r), it is determined that there is no branch.

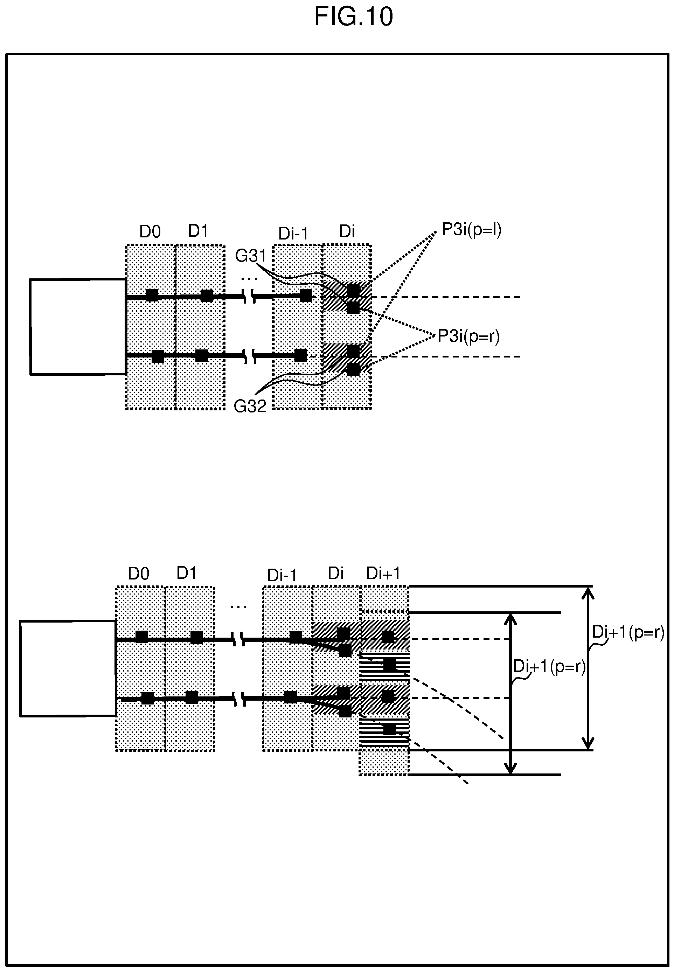

Fig. 10 is a plan view illustrating a narrowing-down process by a track prediction line corresponding to a curve and a branch in the present system 10 according to Embodiment 2. On the other hand, when the number of extracted objects is two objects (G31) as left rail objects Co3i (l) and two objects (G32) as the right rail objects Co3i (r), the present system 10 determines that there is a branch as in Fig. 10. The present system 10 distinguishes the left rail pair P3i (p = l) from a right rail pair P3i (p = r) in the third rail candidate objects Co3i.

In Embodiment 2, a left rail object belonging to the left rail pair P3i (p = l) is referred to as Co3i (l, p = l) and a right rail object is referred as Co3i (r, p = l) among the third rail candidate objects Co3i in the inspection section Di. In the inspection section Di, a left rail object belonging to a right rail pair P3i (p = r) is referred to as Co3i (l, p = r) and a right rail object is referred to as Co3i (r, p = r). Further, in a section in which there is no branch, notation of p = r and p = l is omitted, the left rail object is referred to as Co3i (l), and a right rail object is referred to as Co3i (r).

When a branch is determined in the inspection section Di, the subsequent inspection section Di+1 is separated into the inspection section Di+1 (p = l) for estimating a left rail pair and the inspection section Di+1 (p = r) for estimating a right rail pair for rail detection. Specifically, in the inspection section Di+1 (p = l) of the left rail pair, the track center point in S102 is determined based on the left rail candidate object Co3i (l, p = l) of the left rail pair and the right rail candidate object Co3i (r, p = l) of the left rail pair.

Further, in S109, the track prediction line is calculated using the inspection sections D0, D1, ..., Di and the third rail candidate objects Co3i detected in the inspection section Di (p = l) of the left rail pair. The track center line of S102 in the inspection section Di+1 (p = r) of the right rail pair is calculated based on the left rail candidate object Co3i (l, p = r) of the right rail pair and the right rail candidate object Co3i (r, p = r) of the right rail pair (S102).

Further, in S109, the track prediction line is calculated using the inspection sections D0, D1, ..., Di and the third rail candidate objects Co3i detected in the inspection section Di (p = r) of the right rail pair.

In Embodiment 2, the rail curve complementing unit is not the second rail candidate objects Co20, Co21, ..., Co2i, and Co2n. The rail curve complementing unit performs a curve complementing process on each of the left rail 40 and the right rail 40 for the third rail candidate objects Co30, Co21, ..., Co2n calculated in each inspection section and outputs a rail estimation curve as a rail detection result (S107).

When it is determined in S109 that there is a branch in the inspection section Di, a curve complementation process is performed on each of the following first to fourth targets and a rail estimation curve is output as a rail detection result.

The first targets are left rail candidate objects Co30 (1), Co31 (1), ..., Co3b-1 (1), Co3b (l, p = l), ..., Co3n (l, p = l) of the left rail pair.

The second targets are right rail candidate objects Co30 (r), Co31 (r), ..., Co3b-1 (r), Co3b (r, p = 1), ..., Co3n (r, p = l).

The third targets are left rail candidate objects Co30 (1), Co31 (1), ..., Co3b-1 (1), Co3b (l, p = r), ..., Co3n (l, p = r) of the right rail pair.

The fourth targets are right rail candidate objects Co30 (r), Co31 (r), ..., Co3b-1 (r), Co3b (r, p = r), ..., Co3n (r, p = r) .

By adding the narrowing-down process by the track prediction line, it is possible to exclude the object pair other than the rails 40 that have a width similar to the track gauge and are included in the second rail candidate objects Co2i, it is possible to further improve a success rate of the rail detections, and it is possible to perform more stable rail detection.

By adding the branch determination process for the rails 40, it is possible to perform the rail detection and perform stable rail detection even when there is a branch of the rails 40. Further, the detection is performed separately in the left rail pair and the right rail pair. Therefore, when an opening direction of the branch is given by another means, only the rails 40 in the opening direction can also be detected.

### [Embodiment 3]

In Embodiment 3, in S105 (the first narrowing-down process in the present invention) in accordance with the rail cross-sectional dimensions according to Embodiment 1 or 2, the first rail candidate objects Co1 are extracted using not the first incomplete template that is generated based on the horizontal and transverse dimensions of the rail cross-section and has a rectangular shape but a second incomplete template that reproduces a part of a rail cross-sectional shape.

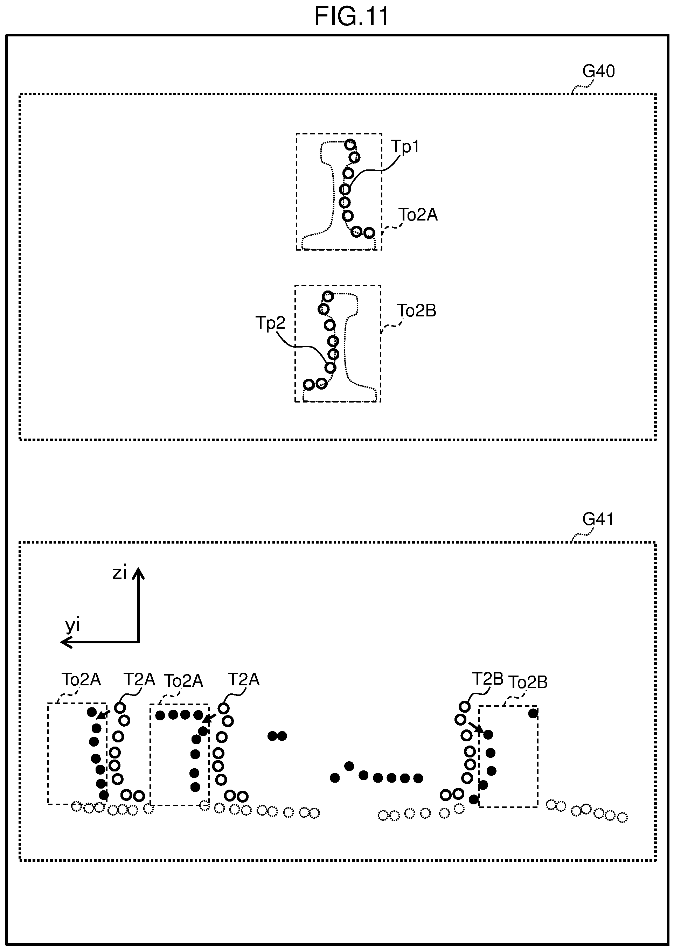

Fig. 11 is a front sectional view illustrating a narrowing-down process in accordance with rail cross-sectional dimensions in the present system 10 according to Embodiment 3. That is, Fig. 11 illustrates definition (G40) of the second incomplete template according to Embodiment 3 and a diagram (G41) in which the second incomplete template and point groups in the inspection section Di are projected onto a yizi plane.

The second incomplete template is generated based on a partial shape of the rail cross-section assuming a possibility of a defect occurring in a point group corresponding to the rail 40. For example, attention is paid to a propriety in which a laser beam radiated to a rail side surface tends to return to the laser radar 101. Therefore, as in Fig. 11 (G40), point groups Tp1 and Tp2 in which only side surfaces of the rails 40 are reproduced form the second incomplete templates. That is, in the system 10, the point group Tp1 is set as a second incomplete template To2A and the point group Tp2 is set as a second incomplete template ToB.

As in Fig. 11 (G41), a rail object To2A is set based on the shape of the second incomplete template T2A and a rail object To2B is set based on the shape of the second incomplete template To2B. In Embodiment 3, the shapes of the rail objects To2A and To2B are assumed to be rectangular shapes.

Next, a method of extracting the first rail candidate objects Co1i using the second incomplete templates T2A and T2B in the inspection section Di will be described. First, the second incomplete template T2A is slid on the yizi plane, similarity with the point group forming the plurality of objects Coi at each yizi position is calculated, and a plurality of positions of the second incomplete templates T2A of which the similarity is equal to or greater than a predetermined threshold are extracted. Further, the plurality of rail objects To2A corresponding to the plurality of extracted second incomplete templates T2A are referred to as the first rail candidate objects Co1i.

Further, the second incomplete templates B are slid on the yizi plane, similarity with the point group forming the plurality of objects Coi at each yizi position is calculated, and a plurality of positions of the second incomplete templates T2B of which the similarity is equal to or greater than the predetermined threshold are extracted. Further, the plurality of rail objects To2B corresponding to the plurality of extracted second incomplete templates T2B are referred to as the first rail candidate objects Co1i.

The above operation is an operation of the narrowing-down process S105 in accordance with the rail cross-sectional dimensions according to Embodiment 3. According to Embodiment 3, even when there is a defect in the point group corresponding to the rail 40, a plurality of positions of rail candidates can be extracted without failure of template matching, and it is possible to perform stable detection.

The present system 10 according to Embodiment 3 prevents failure of the rail detection of matching only an object other than the rail 40 when there are a plurality of objects similar to a rail shape. The present system 10 according to Embodiment 3 first avoids a phenomenon of the matching only other objects by extracting a plurality of rail candidates including a point group corresponding to the rails 40 using the second incomplete template. The present system 10 according to Embodiment 3 can further extract a rail point group with high accuracy, for example, by narrowing down rail candidates using a rail shape feature or the like such as a track gauge through a process in a rear stage.

### [Embodiment 4]

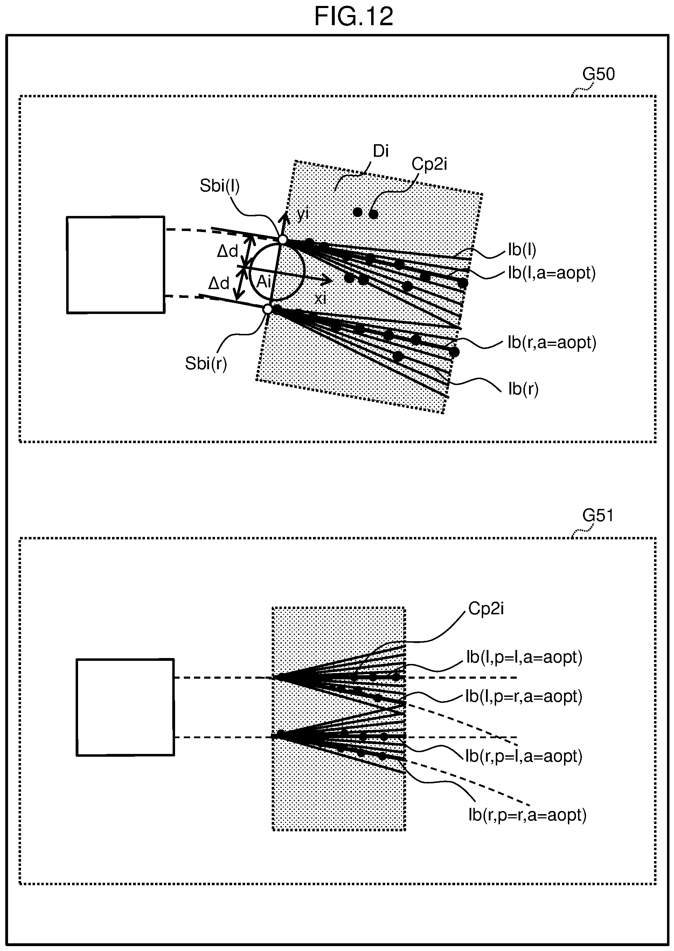

In Embodiment 4, attention is paid to a smooth change in a rail shape in an inspection section. In Embodiment 4 to which the above point is applied, a track prediction line and branch determination method different from Embodiment 2 will be described. Fig. 12 is a plan view illustrating a narrowing-down process in accordance with a track prediction line in the present system 10 (a fourth narrowing-down process in the present invention) according to Embodiment 4. That is, (G50) and (G51) of Fig. 12 are diagrams illustrating methods of extracting the third rail candidate objects Co3i using a track prediction line in the inspection section Di in the present system 10. In Fig. 12, (G50) indicates a case where there is no branch in the inspection section Di and (G51) indicates a case where there is a branch in the inspection section Di.

The present system 10 according to Embodiment 4 first calculates coordinates distant by ΔD in the positive and negative directions of yi from an estimated track center point Ai of the inspection section Di in a yizi coordinate system and sets a point Sbi (l) distant by ΔD in the positive direction of yi and a point Sbi (r) distant by ΔD in the negative direction of yi. Subsequently, the present system 10 calculates parameters for most matching a point group Cp2i forming the second rail candidate objects Co2i to a straight line lb (l) passing through the point Sbi (l) and a straight line lb (r) passing through the point Sbi (r) and parallel to the straight line lb (1).

Here, the present system 10 obtains a function of adding a sum of distances between lb (r) and a point group Po2i to a sum of distances between lb (l) and a point group Cp2i as an objective function I. When there is no branch as in Fig. 12 (G50) with respect to the objective function I for an inclination a of the straight line lb (1), one straight line lb (l) and one straight line lb (r) most match the point group Cp2i. Therefore, the objective function I is considered to have one minimum value.

Conversely, when there is a branch as in (G51), two straight lines lb (l) and two straight lines lb (r) match the point group Cp2i. Therefore, the objective function I is considered to have two minimum values. Accordingly, the present system 10 obtains the minimum value of the objective function I, determines there is no branch when there is one minimum value less than a predetermined value, and calculates an inclination aopt of the straight line lb (l) with a minimum value.

Conversely, when there are two minimum values less than the predetermined value, it is determined that there is a branch. Of inclinations a of the straight lines lb (l) with minimum values, a larger inclination a is defined as an inclination aopt (p = l) of the straight line corresponding to the left rail pair and a smaller inclination is defined as an inclination aopt (p = r) of the straight line corresponding to the left rail pair. Next, a method of extracting the third rail candidate objects will be described.

First, when there is no branch as in Fig. 12 (G50), a point group within a predetermined distance to a straight line lb (l, a = aopt) with aopt is defined as a point group Cp3i (l) corresponding to the left rail objects Co3i (l) in the third rail candidate objects Co3i. A point group within a predetermined distance to the straight line lb (r) with aopt is defined as a point group Cp3i (r) corresponding to the right rail objects Co3i (r) in the third rail candidate objects Co3i.

Subsequently, the present system 10 obtains the left rail objects Co3i (l) from the point group Cp3i (l) and also obtains the right rail object Co3i (r) from the point group Cp3i (r). As a result, the present system 10 detects a third rail objects Co3i. In a more specific method of calculating Co3i (l) and Co3i (r), the present system 10 may define an object group Co3i (l) of a result obtained by grouping the point group Cp3i (l) at a distance and may define an object group Co3i (r) of a result obtained by grouping the point group Cp3i (r) at a distance. The point group Cp3i (l) itself may be defined as an object Co3i (l) and the point group Cp3i (r) itself may be defined as an object Co3i (r).

When there is a branch as in (G51), for a left rail pair, a point group within a predetermined distance to a straight line lb (l, p = l, a = aopt) with aopt (p = l) is defined as a point group Cp3i (l, p = l) corresponding to the left rail objects Co3i (l, p = l) in the third rail candidate objects Co3i. A point group within a predetermined distance to a straight line lb (r, p = l, a = aopt) with aopt (p = l) is defined as a point group Cp3i (r, p = l) corresponding to the right rail objects Co3i (r, p = l) in the third rail candidate objects Co3i.

Subsequently, the present system 10 obtains the left rail objects Co3i (l, p = l) from the point group Cp3i (l, p = l) and similarly obtains the left rail objects Co3i (r, p = l) from the point group Cp3i (r, p = l) to detect the third rail candidate objects Co3i (p = l) of the left rail pair.

For the right rail pair, a point group within a predetermined distance to a straight line lb (l, p = r) with aopt (p = r) is defined as a point group Cp3i (l, p = r) corresponding to the left rail objects Co3i (l, p = r) in the third rail candidate objects Co3i. A point group within a predetermined distance to a straight line lb (r, p = r) with aopt (p = r) is defined as a point group Cp3i (r, p = r) corresponding to the right rail objects Co3i (r, p = r) in the third rail candidate objects Co3i.

Subsequently, the present system 10 obtains the right rail objects Co3i (l, p = r) from the point group Cp3i (l, p = r) and similarly obtains the right rail objects Co3i (r, p = r) from the point group Cp3i (r, p = r) to detect the third rail candidate objects Co3i (p = r) of the right rail pair.

The present system 10 according to Embodiment 4 pays attention to a smooth change in a rail shape. Therefore, the present system 10 can prevent erroneous determination that there is a branch even when the second rail candidate objects Co2i which is not the rail 40 but disposed at an interval similar to the width of the rails 40 approaches the rails 40. As a result, the present system 10 can performs more stable rail detection.

In the present system 10 according to Embodiment 4, the straight lines lb (l) and lb (r) have been used, but the present invention is not limited thereto and curves may be used. For example, for a quadratic curve cb (l) passing through the point Sbi (l) and a quadratic curve cb (r) passing through the point Sbi (r) and parallel to the curve cb (l), the present system 10 may adopt a method of calculating parameters for most matching to the point group Cp2i forming the second rail candidate objects Co2i.

### [Embodiment 5]

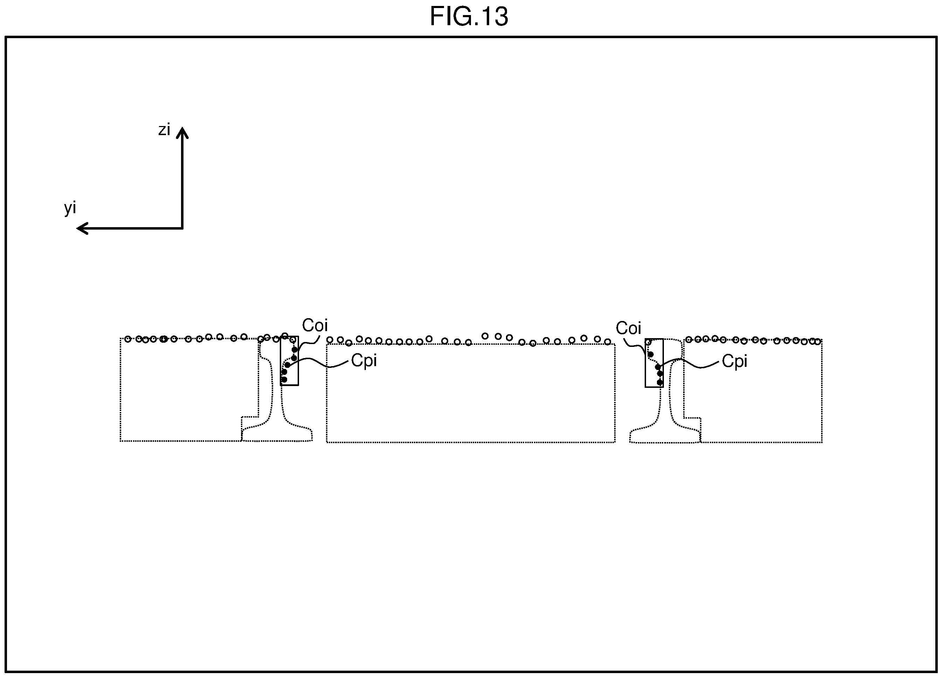

In Embodiment 5, as illustrated in Fig. 13, a rail detection method when only a rail top surface is exposed and other portions are buried on a track lane surface of a tramway, a level crossing, or the like will be described. That is, the present system 10 according to Embodiment 5 adds the process in the ground point group removing of S104, and thus can detect an object even when the rails 40 do not protrude from the track lane surface.

Fig. 13 is a front sectional view illustrating an object extraction method in the present system 10 according to Embodiment 5. That is, Fig. 13 is a diagram illustrating a ground point group removing method in Embodiment 5. A surface of a road intersecting the track (rail) 40 in a level crossing or a road also serving as the track 40 of the tramway (hereinafter representatively referred to as a "level crossing or the like") substantially accords with a top surface of the rail 40. Therefore, when an object on the ground is extracted using ground detection, nothing can be extracted.

To solve this problem, a ground height in a level crossing or the like abruptly changes compared to before and after entering the level crossing or the like, and thus an object formed by a point group including the rail 40 is detected by paying attention to a property in which there is a point group in a part of the rail side surface when the level crossing or the like is viewed on the yizi cross-section.

First, a value Δzg is acquired by subtracting a ground height zi-1 calculated through ground estimation of the inspection section Di-1 from a ground height zi calculated through ground estimation in the inspection section Di. Δzg takes a value close to 0 when the ground height does not abruptly change. Δzg>>0 is obtained in the case of first entering a level crossing or the like in the inspection section Di. Accordingly, when Δzg exceeds a threshold, it is detected that the inspection section Di enters the level crossing or the like and a subsequent process is performed.

The present system 10 can remove a point group corresponding to the ground and extract the point group Cpi protruding downward from the ground by removing a point group of which a distance in the zi direction to the straight line or curve lgi is equal to or less than the threshold Δzg and a point group of which the zi coordinate is larger than the straight line or curve lgi from the intra-section point groups in the inspection section Di. A method of calculating a plurality of objects Coi using the point group Cpi is the method described in Embodiment 1. The present system 10 according to Embodiment 5 can perform the rail detection even in a level crossing or the like where there is a crossroad or the like at a similar height to the top surface of the rail 40.

### [Embodiment 6]

In Embodiment 6, a rail detection method different from Embodiment 5 when the rail 40 is in a level crossing or the like or a track lane of a tramway will be described. In Embodiment 6, the plurality of objects Coi including the rail 40 are detected by paying attention to grooves located only at positions through which a wheel passes in a level crossing or the like and detecting the grooves. First, a determination method for a level crossing or the like in the inspection section Di is similar to Embodiment 5.

Subsequently, when the inspection section Di is determined to be a level crossing or the like, in Embodiment 6, point groups are projected onto a yizi plane to perform grouping. When a distance in the y direction between the groups is within a predetermined range, the groups are determined to be grooves through which a wheel passes.

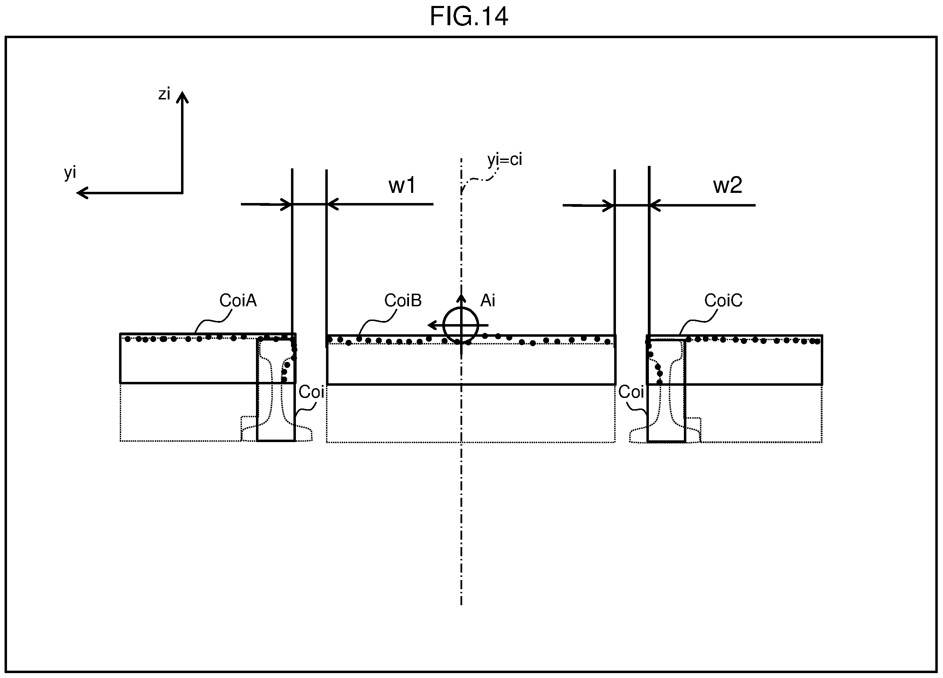

Fig. 14 is a front sectional view illustrating a method of detecting the plurality of objects Coi including the rail 40 by detecting grooves in Embodiment 6. In the case of Fig. 14, when w1 is an inter-group distance between groups CoiA and CoiB, w2 is an inter-group distance between groups CoiB and CoiC, and w1 and w2 (hereinafter referred to by the signs alone) are within a range of a value set with reference to a wheel width, it is determined that w1 and w2 are grooves through which the wheel passes.

In the present system 10, after it is determined that w1 and w2 are the grooves through which the wheel passes, a yi coordinate Ci of an estimated track center Ai is used to determine along which rail the grooves are between left and right rails 40. When the yi coordinate of the groove is greater than Ci, the present system 10 determines that the groove corresponds to the left rail 40, sets a group to the left of the grooves, and sets the group as one of the plurality of objects Coi. Similarly, when the yi coordinate of the groove is less than Ci, the present system 10 determines that the groove corresponds to the right rail 40, sets a group to the right of the grooves, and sets the group as one of the plurality of objects Coi.

In the case of Fig. 14, since the yi coordinate of the groove corresponding to w1 is greater than Ci, the groove corresponds to the left rail 40, and the group is set to the left of the groove, and set as one of the plurality of objects Coi. Since the yi coordinate of the groove corresponding to w2 is less than Ci, the groove corresponds to the right rail 40, the group is set to the right of the groove, and set as one of the plurality of objects Coi. The dimensions of the group are set in advance based on longitudinal and transverse dimensions of the rail cross-section. Even in a case where a point group of a rail side surface cannot be acquired directly in the level crossing or the like, the present system 10 according to Embodiment 6 can detect up to objects including the rails 40 as long as the grooves are detected. Therefore, it is possible to perform the rail detection.

### [Embodiment 7]

In Embodiment 7, when there is a branch, a branch opening direction estimating process of estimating an opening direction of the branch is added. The branch opening direction estimating process is added immediately before the rail curve complementation of S108, information regarding an opening direction is also transmitted in the rail curve complementation of S108. After a process of complementing a left rail pair and a right rail pair is performed in the rail curve complementation of S108, a rail detection result and the information regarding the opening direction are output as a rail estimation curve.

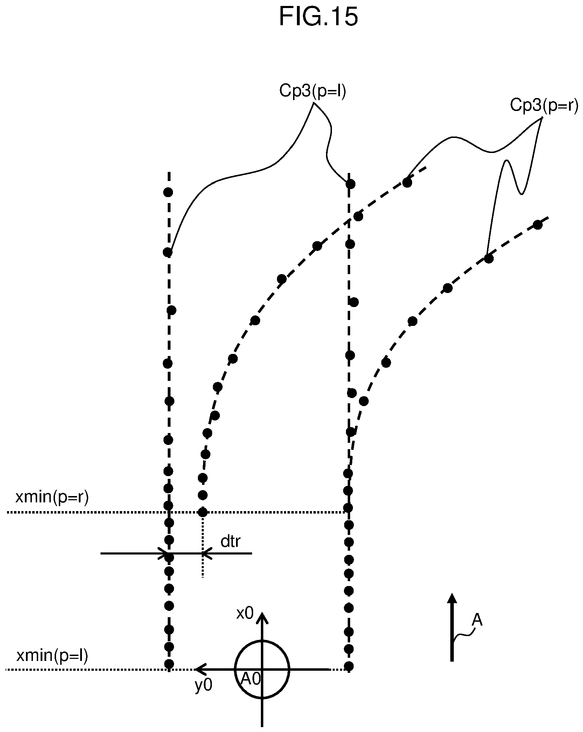

Fig. 15 is a plan view illustrating a branch determination method in the present system according to Embodiment 7. That is, Fig. 15 is a diagram illustrating a method of estimating a branch opening direction according to Embodiment 7. In Embodiment 7, the information regarding the third rail candidate objects estimated in accordance with the method described in Embodiment 2 or 4 is used. Specifically, left rail pair all-point groups Cp3 (p = l) in the inspection sections D0, D1, ..., Dn (p = l) and right rail pair all-point groups Cp3 (p = r) in the inspection sections D0, D1, ..., Dn (p = r) are used.

First, a nearest neighbor position xmin (p = l) in a traveling direction of the left rail pair all-point group Cp3 (p = l) and a nearest neighbor position xmin (p = r) in the traveling direction of the right rail pair all-point group Cp3 (p = r) are obtained. When there is a tongue rail 40 of a branch in front of a vehicle, the right rail pair or the left rail pair are located after the tongue rail 40. Therefore, xmin (p = l) and xmin (p = r) are not the same.

Accordingly, when xmin (p = l) and xmin (p = r) are distant by a predetermined distance or thee like, a position more distant than the vehicle between xmin (p = l) and xmin (p = r) can be considered to be a distal end position of the tongue rail 40. Subsequently, a width of the left and right rails 40 of the left rail pair and a width of the left and right rails 40 of the right rail pair at the distal end position of the tongue rail 40 are calculated.

As a method of calculating the width of the left and right rails 40, there is a method of calculating each of a point of the left rail 40 of which an x coordinate is closest to the distal end position of the tongue rail 40 and a point of the right rail 40 of which an x coordinate is closest to the distal end position of the tongue rail 40 in the rail pair all-point group Cp3, and setting an absolute value of a difference between the point of the left rail 40 and the point of the right rail 40 as the width of the left and right rails 40.

Further, a value Dtr obtained by subtracting the width of the left and right rails 40 of the right rail pair from the width of the left and right rails 40 of the left rail pair is obtained as an opening direction determination value. When the opening direction determination value is a positive value, the left rail pair is considered to be opened. When the opening direction determination value is a negative value, the right rail pair is considered to be opened.

The above method is a method of determining the opening direction of the branch in Embodiment 7. Only the rail pair of the opening direction is transmitted in the rail curve complementation of S108 as necessary. According to the above method, it can be determined which is opened between the left and right when there is a branch. In the case of a system in which it is necessary to detect only a branch that is opened, it is possible to perform more stable rail detection.

### [Embodiment 8]

In Embodiment 8, a mounting setting in which a laser radar 101 can ascertain many point groups of the rails 40 will be described. Fig. 16 is a plan view illustrating a method of installing the sensor 101 in the present system 10 according to Embodiment 8. That is, Fig. 16 is a diagram illustrating a range in which a rail object can be detected at an installation angle of the laser radar 101, and G61 is an installation method recommended in Embodiment 8.

In the case of Fig. 16 (G60), point groups corresponding to the ground and acquired by the laser radar 101 become a layer structure L0, and an angle formed by the layer structure L0 and a curve rail R in the inspection section D2 is a value close to 0. The present system 10 set in this way cannot acquire the point groups corresponding to the rails 40 and cannot perform rail detection in the inspection section D2.

On the other hand, when the laser radar 101 is installed so that point groups corresponding to the ground become a layer structure L1 as illustrated in Fig. 16 (G61), an angle formed by the layer structure L1 and the curve rail R in the inspection section D2 is maintained away from 0 degrees. The present system 10 set in this way can acquire the point groups corresponding to the rails 40 and can perform the rail detection in the inspection section D2.

Accordingly, in the present system 10 according to Embodiment 8, a mounting position or a mounting angle of the laser radar 101 are set such that an angle formed between a rail curve assumed in an operation and a layer structure radiated to the ground is equal to or greater than a predetermined value. The present system 10 according to Embodiment 8 can keep the rail detection until a front away from the vehicle 20 even when the vehicle 20 arrives at a curve. Therefore, it possible to perform more stable rail detection. The layer structures L0 and L1 mean trajectories of a sweep operation of laser irradiation of the laser radar 101.

### [Supplements]

There are two main methods for rail detection. In the first method, rail detection in front of a vehicle is performed from a position estimation result by comparing an own position estimation result of the vehicle with a map on which latitude and longitude of a rail installation location are clarified. In the method, rail detection accuracy depends on own position estimation accuracy. Therefore, there is a problem that rail detection is difficult in a region where an own position is uncertain. The present system 10 adopts the second method which can addresses the problem.

In the second method, the sensor 101 mounted in a vehicle acquires data in front of the vehicle, including the rails 40, extracts the rails 40 in front of the vehicle from a sensor output, and recognizes a location of the rail. The rail detection method by the sensor 101 can detect the rails 40 without depending on own position estimation accuracy.

Hereinafter, main configurations, operational effects, and advantages of the present system 10 will be summarized.
[1] As an overview is illustrated in Figs. 1, 3, and 8, the present system 10 is a front monitoring system including the sensor 101 that ascertains the track 40 for guiding the mobile body 20 and a computer that processes a sensor output and makes monitoring information highly accurate. The present system 10 includes a laying-surface point group removing unit, a first narrowing-down unit, a second narrowing-down unit, and a track curve complementing unit.

The sensor output includes a point group corresponding to the track 40 and a point group corresponding to a laying surface of the track 40. The laying-surface point group removing unit extracts information regarding an object by removing the laying-surface point group from the sensor output. As a result, the laying-surface point group removing unit extracts an object projecting from the laying surface of the track 40.

The first narrowing-down unit extracts a first track candidate object by comparing a cross-sectional shape of the object with a track cross-section stored in a memory of the computer. The second narrowing-down unit detects a second track candidate object by comparing a width of the first track candidate object with a width of the track cross-section. The track curve complementing unit recognizes the track 40 by complementing a track object including the second track candidate object and connecting the points to estimate the contour.

The present system 10 provides positional information of the track 40 recognized in this way to an operation subject or a monitoring subject (hereinafter referred to as an "operation subject or the like"). The determination of whether there is an obstacle 301 to the mobile body 20 is supported for the operation subject or the like receiving the positional information. The present system 10 can recognize a location of the track 40 stably to follow the location of the track even when a point group corresponding to the track 40 acquired by the sensor 101 is incomplete. That is, the present system 10 recognizes the location of the track 40 with high accuracy, and thus there is the advantage of supporting monitoring of the operation subject or thee like.

[2] The track 40 in the present system 10 according to [1] may include the plurality of rails 40 in which, for example, two rails form a pair. The rails 40 are not limited to long-distance transportation applications and a crane such as a gantry crane is included as an example of the mobile body 20 moving over a short distance of several hundred meters. The present system 10 takes the forms illustrated in Figs. 6, 7, 9, and 11.

The laying surface is the ground, for example, a surface including the curve lgi in Fig. 6. The laying-surface point group removing unit is a ground point group removing unit. The first track candidate object corresponds to a plurality of objects including the first rail candidate objects Co1i and is not limited to a square (rectangle) illustrated in Fig. 6. The first narrowing-down unit extracts a plurality of first rail candidate objects by comparing cross-sectional dimensions of the plurality of objects with rail cross-sectional dimensions stored in the memory of the computer. The second narrowing-down unit detects the second rail candidate object Co2i by comparing dimensions between the plurality of first rail candidate objects with dimensions between the plurality of rails, for example, a track gauge.

The track curve complementing unit recognizes the rails 40 by complementing the plurality of objects including the second rail candidate objects Co2i. In the present system 10 with this configuration, even when the point groups corresponding to the rails 40 acquired by the sensor 101 are incomplete, the actual rails 40 laid in a route along which the mobile body 20 travels are stored in the memory of the computer and the cross-sectional dimensions are compared to the sensor output. Therefore, the rails 40 can be stably recognized.

[3] In the present system 10 according to [2], the first narrowing-down unit may include a first incomplete template generated based on the rail cross-sectional dimensions illustrated in Fig. 6. The first incomplete template may have a rectangular (basic) or arbitrary shape generated based on maximum longitudinal and transverse dimensions of a rail cross-section. The present system 10 may extracts a plurality of objects of which cross-sectional dimensions are within the first incomplete template as the plurality of first rail candidate objects. The present system 10 with this configuration narrows down the candidates using the first incomplete template. The rails 40 can be detected with a certain degree of certainty.

[4] In the present system 10 according to [2], the first narrowing-down unit may include a second incomplete template generated based on the rail cross-sectional shape illustrated in Fig. 11 according to Embodiment 3. The present system 10 may extract a plurality of objects in which a precision ratio of a point group forming the plurality of objects to the second incomplete template is equal or or greater than a predetermined value as the plurality of first rail candidate objects that are a pair of rails 40.

In the present system 10 with this configuration, the rails 40 can be further narrowed down using the second incomplete template of the first narrowing-down unit and can be detected with further improved certainty. The second incomplete template illustrated in Fig. 11 enhances detection accuracy by ascertaining a shape of a characteristic rail side surface using the property of the railway rails 40, where the rusty sides reflect the laser radar more easily than the top surface.

[5] In the present system 10 according to [2], the second narrowing-down unit may obtain a plurality of representative positions of the plurality of first rail candidate objects from the track axis prediction line yi = ci illustrated in Figs. 7 and 8. The first rail candidate objects Co1i in which a distance between the plurality of representative positions is a predetermined distance obtained based on the dimensions (track gauge) between the plurality of rails (S106 of Fig. 8) may be set as the second rail candidate objects Co2i. The present system 10 with this configuration can estimate the second rail candidate objects Co2i that matches the track gauge stored in the memory of the computer as the rails 40 with a high possibility.

[6] In the present system 10 according to [2], the mobile body 20 may be specialized for the railway vehicle 20 as illustrated in Fig 1. The present system 10 with this configuration further includes the third narrowing-down unit described in Figs. 2 and 8. The third narrowing-down unit may extract the second rail candidate objects Co2i within a predetermined range as the third rail candidate objects Co3i with respect to a first rail candidate line generated using a rail detection result of a position closer to the vehicle 20 than a predetermined section. The present system 10 in the configuration applied to the railway vehicle 20 can detect the rails 40 with a sufficient degree of certainty in consideration of practicality.

[7] In the present system 10 according to [6], the third narrowing-down unit performs the processes described in Figs. 9 and 10 when there are a plurality of previous-section rail objects in an immediately previous section from the predetermined section. That is, the third narrowing-down unit separates the previous-section rail candidate objects into a left rail pair including left rail objects and a right rail pair including right rail objects.

The present system 10 with this configuration extracts the second rail candidate objects Cp2i in a predetermined range with respect to a left rail candidate line generated using the left rail pair and a rail detection result of an immediately previous section close to the vehicle 20 from the predetermined section. Similarly, the present system 10 extracts the second rail candidate objects Cp2i in the predetermined range with respect to a right rail candidate line generated using the right rail pair and the rail detection result of the immediately previous section close to the vehicle from the predetermined section. In this way, the present system 10 specified for the railway vehicle 20 for which two rails 40 are laid in parallel can detect the two rails 40 with a sufficient degree of certainty.

[8] The present system 10 according to [2] further includes a fourth narrowing-down unit. The fourth narrowing-down unit extracts the second rail candidate objects Cp2i within a predetermined distance to a second rail candidate lines as fourth rail candidate objects, as illustrated in G50 of Fig. 12. The fourth rail candidate objects are extracted by a minimum objective function generated based on distance between the plurality of second rail candidate lines and the second rail candidate objects Cp2i.

The plurality of second rail candidate lines are generated based on the track axis estimation position obtained from the track axis prediction line yi = ci. Here, instead of the second rail candidate objects Cp2i, a second rail candidate point group forming the second rail candidate objects Cp2i may be used. In the present system 10 with this configuration, the fourth narrowing-down unit can detect the rails 40 with high accuracy even in a curve section by measuring a track gauge of two laid rails 40.

[9] In the present system 10 according to [8], as illustrated in G51 of Fig. 12, the fourth narrowing-down unit may set other rail candidate objects by excluding the fourth rail candidate objects from the second rail candidate objects Cp2i. The present system 10 with this configuration may extract other rail candidate lines in which the objective function generated based on the distances between the plurality of second rail candidate lines and the other rail candidate objects is equal to or less than a predetermined value.

Here, instead of the other rail candidate objects, another rail candidate object point group forming the other rail candidate objects may be used. The present system 10 may further have a function of adding other rail candidate objects within a predetermined distance and the extracted other rail candidate line to the fourth rail candidate objects. In the present system 10 with this configuration, the fourth narrowing-down unit can detect rails located in a short distance from the track axis estimation position in addition to the two laid rails 40 when there is a tongue rail including a switch.

[10] In the present system 10 according to [2] may extract an object protruding downward from the ground detected by the ground point group removing unit with respect to a ground height in a range immediately previous to the predetermined range, as illustrated in Fig. 13 of Embodiment 5 and Fig. 14 of Embodiment 6. When the ground height in a predetermined range rises discontinuously, the present system 10 may detect the ground as a road intersecting the track or a road also serving as the laying surface of the track. That is, the present system 10 with this configuration can detect the rails even when only a rail top surface is exposed and other portions are buried on a track lane surface of a tramway, a level crossing, or the like.

[11] In the present system 10 according to [7], as illustrated in Fig. 15, the present system 10 determines that there is a switch with a next reference. That is, the present system 10 determines that there is the switch when a relative position between the nearest neighbor position xmin (p = l) in a traveling direction of the left rail pair all-point group Cp3 (p = 1) corresponding to the left rail pair and the nearest neighbor position xmin (p = r) in the traveling direction of the right rail pair all-point group Cp3 (p = r) corresponding to the right rail pair is distant by a predetermined distance or more.

The present system 10 obtains a difference obtained by subtracting a width of the right rail pair from a width of the left rail pair in a section remote from the vehicle 20 between the nearest neighbor position xmin (p = l) in the traveling direction of the left rail pair point group and the nearest neighbor position xmin (p = r) in the traveling direction of the right rail pair point group. The present system 10 determines that the left rail 40 is opened when the difference is a positive value, and determines that the right rail 40 is opened when the difference is a negative value. The present system 10 with this configuration can determine an opening direction when there is a switch in the rail 40.

[12] In the present system 10 according to [11], when the left rail 40 is determined to be opened, only the left rail is determined to be a rail in a subsequent section. When the right rail 40 is determined to be opened, only the right rail is determined to be the rail 40 in the subsequent section. Since the present system 10 with this configuration detects rails in only a side determined to be an opening section of a switch, waste is small and monitoring efficiency is good.

[13] As illustrated in the layer structures L0 and L1 and the sweep state in Fig. 16, in the present system 10 according to [1], the sensor 101 may be configured such that acquisition point groups are organized in units of layers. At a position and an angle at which the sensor 101 is installed, an assumed track direction and layer direction may be within a predetermined angle range in which rail detection can be maintained. The present system 10 with this configuration can maintain the rail detection at a position distant from the mobile body 20 with high accuracy even when the mobile body 20 arrives at a curve, and thus it is possible to perform more stable rail detection.

[14] In the present system 10 according to [2] to [13], as illustrated in Fig. 1, the sensor 101 may be mounted in the vehicle 20 traveling along the rail 40. The present system 10 may further include the rail detection unit 104 and the obstacle determination unit 105. The rail detection unit 104 detects the rail 40 based on information acquired by the sensor 101.

The obstacle determination unit 105 detects the obstacle 301 within the predetermined range set based on the rail 40 detected by the rail detection unit 104. The present system 10 with this configuration determines whether there is the traveling obstacle 301 with respect to the vehicle 20 and provides the information to the operation subject or the like. A safe operation is supported for the operation subject or the like receiving the information.

The present method can be summarized as follows.

[15] As also exemplified in Figs. 2 and 8, the present method is a front monitoring method using information when a computer processes a sensor output obtained by ascertaining the track 40 for guiding a mobile body. The computer performs the following process by causing each functional unit formed by executing a program stored in a memory to perform information processing.

First, a laying surface of the track 40 is detected from the point group (D101) ascertained by the sensor 101 (S101 to S103) . Subsequently, the laying-surface point group removing unit extracts an object protruding from the detected laying surface (S104) . Subsequently, the first narrowing-down unit extracts the first track candidate object by comparing the cross-sectional shape of the extracted object with the track cross-section stored in the computer (S105) . The second narrowing-down unit detects the second track candidate object by comparing the width of the detected first track candidate object with the width of the track cross-section (S106).

The track 40 (D102) is recognized more accurately when the track curve complementing unit complements a track object including the detected second track candidate object (S108). The positional information of the track 40 based on the recognition is provided to the operation subject or the like. As a result, the operation subject or the like is supported to easily detect whether there is the traveling obstacle 301 near the front of the mobile body. According to the present method, the track 40 can be recognized stably even when the point group corresponding to the track 40 acquired by the sensor 101 is incomplete. According to the present method, it is possible to output the information obtained by recognizing the track 40 with high accuracy and support the safe operation for the operation subject or the like.

### Reference Signs List

10: front monitoring system
20: vehicle (mobile body)
40: rail 40
50: vehicle traveling region
101: front monitoring sensor
103: object detection unit
104: rail detection unit
105: obstacle determination unit
301: object in front of vehicle (for example, obstacle such as person)
Co1i: first rail candidate object
Co2i: second rail candidate object
Co3i: third rail candidate object
Ai: estimated track center
Cp3 (p = l): left rail pair all-point group
Cp3 (p = r): right rail pair all-point group
D0 to D2: inspection section, point group data point group data D101: point group data D101
D102: rail estimated curve
To2A, To2B: second incomplete template
Tp1, Tp2: point group (in which only side surface of rail 40 is reproduced)
O: origin
xmin (p = l): nearest neighbor position in traveling direction of left rail pair all-point group
xmin (p = r): nearest neighbor position in traveling direction of right rail pair all-point group
w1, w2: inter-group distance
yi: track center line
yi = ci: track axis prediction line
Σ0: vehicle fixing 3-dimensional xyz coordinate system (coordinate system Σ0)
Δzg: threshold

## Claims

1. A front monitoring system including a sensor that ascertains a track for guiding a mobile body and a computer that processes a sensor output, the front monitoring system comprising:
a laying-surface point group removing unit configured to remove a laying-surface point group from the sensor output;
a first narrowing-down unit configured to extract a first track candidate object by comparing a cross-sectional shape of an object that is information included in a remainder after the removal with a track cross-section stored in a memory by the computer;
a second narrowing-down unit configured to detect a second track candidate object by comparing a width of the first track candidate object with a width of the track cross-section; and
a track curve complementing unit configured to recognize the track by complementing a track object including the second track candidate object,
wherein the sensor output includes a point group corresponding to the track and a point group corresponding to a laying surface of the track,
wherein the laying-surface point group removing unit extracts information regarding an object from the sensor output, and
wherein the track curve complementing unit recognizes an object projecting from the laying surface as a track based on the extracted information regarding the object, and outputs information for supporting determination of whether a traveling obstacle is near the recognized track.

2. The front monitoring system according to claim 1,
wherein the track includes a plurality of rails,
wherein the laying surface is a ground,
wherein the laying-surface point group removing unit is a ground point group removing unit,
wherein the first track candidate object is a plurality of objects including a plurality of first rail candidate objects,
wherein the first narrowing-down unit extracts the plurality of first rail candidate objects by comparing cross-sectional dimensions of the plurality of objects with rail cross-sectional dimensions,
wherein the second narrowing-down unit detects second rail candidate objects by comparing dimensions between the plurality of first rail candidate objects with dimensions between a plurality of rails,
wherein the track curve complementing unit is a rail curve complementing unit that detects a rail by complementing the plurality of objects including the second rail candidate object.

3. The front monitoring system according to claim 2,
wherein the first narrowing-down unit includes a first incomplete template generated based on the rail cross-sectional dimensions,
wherein the first incomplete template has a rectangular or arbitrary shape generated based on maximum longitudinal and transverse dimensions of a rail cross-section, and
wherein the plurality of objects of which cross-sectional dimensions are within the first incomplete template are extracted as the plurality of first rail candidate objects.

4. The front monitoring system according to claim 2,
wherein the first narrowing-down unit includes a second incomplete template generated based on a rail cross-sectional shape, and
wherein a plurality of objects in which a precision ratio of a point group forming the plurality of objects to the second incomplete template is equal or or greater than a predetermined value are extracted as the plurality of first rail candidate objects.

5. The front monitoring system according to claim 2,
wherein the second narrowing-down unit obtains a plurality of representative positions of the plurality of first rail candidate objects by a track axis prediction line, and
wherein the first rail candidate objects in which a distance between the plurality of representative positions is a predetermined distance obtained based on the dimensions between the plurality of rails are set as the second rail candidate objects.

6. The front monitoring system according to claim 2,
wherein the mobile body is a railway vehicle, and
wherein the front monitoring system further comprises a third narrowing-down unit configured to extract the second rail candidate objects within a predetermined range with respect to a first rail candidate line generated using a rail detection result of an immediately previous section close to the vehicle from a predetermined section as third rail candidate objects.

7. The front monitoring system according to claim 6,
wherein the third narrowing-down unit separates a plurality of previous-section rail objects present in the immediately previous section from the predetermined section into a left rail pair including left rail objects and a right rail pair including right rail objects,
wherein the second rail candidate objects are extracted from a predetermined range with respect to a left rail candidate line generated using the left rail pair and a rail detection result of the immediately previous section close to the vehicle from the predetermined section, and
wherein the second rail candidate objects are extracted from a predetermined range with respect to a right rail candidate line generated using the right rail pair and the rail detection result of the immediately previous section close to the vehicle from the predetermined section.

8. The front monitoring system according to claim 2, further comprising a fourth narrowing-down unit configured to extract a second rail candidate line in which an objective function generated based on distances between a plurality of second rail candidate lines generated based on a track axis estimation position obtained from a track axis prediction line and the second rail candidate objects or a second rail candidate point group including the second rail candidate objects is minimum, and to extract the second rail candidate objects within a predetermined distance range and the second rail candidate line as fourth rail candidate objects.

9. The front monitoring system according to claim 8, wherein the fourth narrowing-down unit
sets other rail candidate objects by excluding the fourth rail candidate objects from the second rail candidate objects,
extracts other rail candidate lines in which an objective function generated based on distances between the plurality of second rail candidate lines and the other rail candidate objects or another rail candidate object point group forming the other rail candidate objects is equal to or less than a predetermined value, and
recognizes the other rail candidate objects within a predetermined distance to the other rail candidate line as the fourth rail candidate objects.

10. The front monitoring system according to claim 2,
wherein, when a ground height in a predetermined range rises discontinuously with respect to a ground height in a range immediately previous to the predetermined range, a road intersecting the track or a road also serving as the laying surface is detected, and
wherein an object protruding downward from a ground detected by the ground point group removing unit is extracted.

11. The front monitoring system according to claim 7,
wherein, if an opening direction when there is a switch in middle of the rail is able to be determined and a distance between a nearest neighbor position in a traveling direction of a left rail pair point group corresponding to the left rail pair and a nearest neighbor position in a traveling direction of a right rail pair point group corresponding to the right rail pair is a predetermined value or more, a difference obtained by subtracting a width of the right rail pair from a width of the left rail pair remote from the vehicle between the nearest neighbor position in the traveling direction of the left rail pair point group and the nearest neighbor position in the traveling direction of the right rail pair point group is obtained,
wherein, when the difference is a positive value, the left rail is determined to be opened, and
wherein, when the difference is a negative value, the right rail is determined to be opened.

12. The front monitoring system according to claim 11,
wherein, when the left rail is determined to be opened, only the left rail is detected as a rail in a subsequent section, and
wherein, when the right rail is determined to be opened, only the right rail is detected as a rail in the subsequent section.

13. The front monitoring system according to claim 1,
wherein the sensor is configured such that acquisition point groups are organized in units of layers, and
wherein, at a position and an angle at which the sensor is installed, an angle in a layer direction with respect to an assumed track direction is within a predetermined range.

14. The front monitoring system according to any one of claims 2 to 13, further comprising:
a sensor mounted in a vehicle traveling along a rail;
a rail detection unit configured to detect the rail based on information acquired by the sensor; and
an obstacle determination unit configured to set a predetermined range based on the rail detected by the rail detection unit and detect an obstacle within the predetermined range.

15. A front monitoring method based on information when a computer processes a sensor output obtained by ascertaining a track for guiding a mobile body, the front monitoring method comprising:
performing information processing by each functional unit formed by executing a program stored in a memory by the computer;
extracting an object protruding from a laying surface detected from the sensor output including a point group corresponding to the track by a laying-surface point group removing unit;
extracting a first track candidate object by comparing a cross-sectional shape of the object with a track cross-section stored in the memory by a first narrowing-down unit;
detecting a second track candidate object by comparing a width of the first track candidate object with a width of the track cross-section by a second narrowing-down unit;
detecting the track by complementing a track object including the detected second track candidate object by a track curve complementing unit; and
supporting determination of whether a traveling obstacle is near the detected track.
